# EUROPÄISCHE PATENTSCHRIFT

(11) **EP 0 797 695 B1**
(45) Veröffentlichungstag und Bekanntmachung des Hinweises auf die Patenterteilung: **01.03.2000**
(21) Anmeldenummer: 95942104.1
(22) Anmeldetag: 11.12.1995
(51) Int. Cl.: D01F 2/00, D01F 13/02, C08J 5/18, C08L 1/02

(54) **VERFAHREN ZUR HERSTELLUNG CELLULOSISCHER FORMKÖRPER**
PROCESS FOR PRODUCING CELLULOSIC MOLDINGS
PROCEDE DE FABRICATION D'ARTICLES MOULES CELLULOSIQUES

(30) Priorität: 15.12.1994 DE 4444700
(43) Veröffentlichungstag der Anmeldung: 01.10.1997
(73) Patentinhaber: Akzo Nobel N.V., 6824 BM Arnhem (NL)
(72) Erfinder: CONNOR, Hans-Georg, D-63906 Erlenbach (DE); BUDGELL, Derek, D-63906 Erlenbach (DE)
(74) Vertreter: Fett, Günter, Dipl.-Ing.
(86) Internationale Anmeldenummer: EP9504873
(87) Internationale Veröffentlichungsnummer: WO9618761

(56) Entgegenhaltungen:
- EP-A- 0 679 739

## Beschreibung

Die Erfindung betrifft ein Verfahren zur Herstellung von cellulosischen Formkörpern wie Fasern, Filamenten, Garnen, Filmen, Membranen in Form von Flachmembranen, Schlauchmembranen und Hohlfasermembranen und dergleichen durch Verformen cellulosischer Löungen in einem Aminoxid eines tertiären Amins und ggf. Wasser.

Es ist seit langem bekannt, cellulosische Polymere in einem Aminoxid eines tertiären Amins, ggf. in Gegenwart von Wasser zu lösen und aus deren Lösungen durch Pressen durch Düsenwerkzeuge Formkörper wie Fasern, Filamente, Garne, Filme, Membranen in Form von Flachmembranen, Schlauchmembranen und Hohlfasermembranen und dergleichen herzustellen (DE-A 29 13 589). Als besonders geeignet haben sich dabei Verfahren herausgestellt, die mit N-Methylmorpholin-N-oxid arbeiten und die heute im Mittelpunkt des wirtschaftlichen Interesses und der Entwicklungsarbeiten stehen. Verfahren zur Herstellung derartiger Formkörper unter Verwendung von N-Methylmorpholin-N-oxid, im folgenden NMMO-Verfahren genannt, bestehen im wesentlichen darin, daß man zunächst aus Cellulose, wie z.B. Baumwoll-Linters, Zellstoff u.dgl., Wasser und NMMO eine Suspension herstellt und diese durch Erwärmen und Entzug eines Teils des Wassers in eine Lösung überführt.

Diese Lösung wird sodann filtriert und durch eine Düse, vorzugsweise unter Zwischenschaltung eines Luftspalts, in ein Fällbad extrudiert, wobei durch Koagulation die Formkörper wie Fäden, Filme oder Membranen entstehen. Diese Formkörper werden sodann gewaschen, um noch vorhandenes tertiäres Aminoxid zu entfernen. Anschließend kann der Formkörper getrocknet und in üblicher Weise weiterverarbeitet, z.B. aufgewickelt werden, usw.

Das NMMO-Verfahren zeichnet sich gegenüber den klassischen Verfahren zur Herstellung von cellulosischen Formkörpern wie dem Kupferammonprozeß oder insbesondere dem Viskoseverfahren vor allem dadurch aus, daß es sich dabei im wesentlichen um physikalische Vorgänge handelt, so daß zumindest theoretisch keine chemischen Reaktionen stattfinden und keine chemischen Nebenprodukte entstehen, die als Abfallprodukte entsorgt oder durch chemische Methoden in die Ausgangsprodukte umgewandelt werden müßten. Das NMMO-Verfahren gehört somit grundsätzlich zu den sehr umweltfreundlichen Verfahren. Außerdem ist das eigentliche Ausgangsprodukt ein nachwachsender Rohstoff, und das cellulosische Endprodukt ist biologisch bestens abbaubar.

Es hat sich aber gezeigt, daß, insbesondere bei längerem und kontinuierlichen Arbeiten, es häufig dazu kommt, daß sich vor allem in den Waschstrecken schmierige Ablagerungen bilden, daß das Waschwasser trübe wird und daß Spritzer von Waschwasser, welche auf das Innere der zum Schutz der Waschstrecke aufgestellten Gehäuse gelangen, Plätze für Schimmel-, Algenbildung u.dgl. sind. Diese offensichtlich auf ein biologisches Wachsen zurückzuführenden Verunreinigungen geben der Anlage nicht nur ein verschmutztes Aussehen sondern können weitere Anlagenteile wie Filter, Pumpen u.dgl. befallen und verstopfen. Dabei stellen Agglomerate eine besondere Gefahr dar, da sie z.B. Filter schlagartig verstopfen können. Ferner gelangen derartige Verunreinigungen auch in die hergestellten Formkörper, was insbesondere bei Membranen eine große Gefahr bedeuten kann, da diese sehr häufig auf Gebieten eingesetzt werden wie in der Medizin und der Lebensmitteltechnik, wo es auf höchste Sauberkeit, Hygiene, Keimfreiheit und Freiheit von toxischen Substanzen ankommt.

Die Produktionsanlage muß deshalb häufig äußerst sorgfältig gereinigt werden, was sehr arbeitsaufwendig ist. Auch müssen Formkörper, welche keimfrei sein sollen, stets besonders intensiv sterilisiert und auf einwandfreie Qualität überprüft werden.

Es besteht somit noch ein großes Bedürfnis nach einem Verfahren, welches die oben geschilderten Nachteile nicht aufweist und zu Produkten mit wertvollen Eigenschaften führt.

Aufgabe der Erfindung ist es deshalb, ein Verfahren der eingangs geschilderten Art zur Verfügung zu stellen, bei dem die Bildung von Algen, Pilzen, Schimmel u.dgl. nicht stattfindet und das Formkörper wie u.a. Membranen zur Verfügung stellt, die im wesentlichen frei von derartigen Verunreinigungen, Keimen und insbesondere pathogenen Keimen u.dgl. ist.

Aufgabe der Erfindung ist es ferner, ein derartiges Verfahren zur Verfügung zu stellen, das wirtschaftlich und effektiv arbeitet und bei dem das Fällbad, Waschwasser und Lösungsmittel auf einfache und wirksame Weise rückgewonnen werden können.

Diese Aufgabe wird gelöst durch ein Verfahren zur Herstellung von Formkörpern wie Fasern, Filamenten, Garnen, Filmen, Membranen in Form von Flachmembranen, Schlauchmembranen und Hohlfasermembranen, u.dgl. durch Pressen cellulosischer Lösungen in einem Aminoxid eines tertiären Amins, insbesondere in N-Methylmorpholin- N-oxid, und ggf. Wasser durch eine Düse und Ausfällen in einem Fällbad, Waschen der erhaltenen Formkörper, wobei man Fällbadflüssigkeit und Waschwasser ggf. zwecks Rückgewinnung des Aminoxids des tertiären Amins aufarbeitet, dadurch gekennzeichnet, daß man dem Fällbad und/oder dem Waschwasser Wasserstoffperoxid, Peressigsäure, Ozon oder Chlordioxid zufügt. Vorzugsweise wird Wasserstoffperoxid verwendet, das zusätzlich ein oder mehrere Biozide enthält. Sehr geeignet ist auch Wasserstoffperoxid, das zusätzlich einen oder mehrere Stabilisatoren enthält. Es ist vorteilhaft, Wasserstoffperoxid in Mengen von 25 bis 10 000 ppm, bezogen auf die Fällbadflüssigkeit oder das Waschwasser einzusetzen, insbesondere in Mengen von 50 bis 500 ppm.

Die Konzentration von Peressigsäure wird vorzugsweise auf 5 bis 250 ppm, bezogen auf die Fällbadflüssigkeit oder das Waschwasser eingestellt, für Ozon liegen die bevorzugten Werte zwischen 0,05 bis 5 ppm und bei Chlordioxid zwischen 0,1 bis 2 mg/l Fällbadflüssigkeit oder Waschwasser.

Die angegebenen Substanzen können im Gemisch oder auch alternierend, d.h. im Wechsel zugegeben werden.

So kann z.B. Wasserstoffperoxid zusammen im Gemisch mit beispielsweise Peressigsäure dosiert werden. Es ist auch möglich, diese beiden Komponenten in getrennten Leitungen separat an gleichen oder von einander entfernten Stellen zuzudosieren.

Ein weiteres vorteilhaftes Verfahren besteht darin, daß man Wasserstoffperoxid permanent und zusätzlich in zeitlichen Abständen Peressigsäure, Ozon oder Chlordioxid zugibt.

Es kann von Vorteil sein, die Zugabe der besagten Substanzen diskontinuierlich durchzuführen. Die Zugabe der Substanzen kann automatisch geschehen.

In einer besonders vorteilhaften Ausführungsform des erfindungsgemäßen Verfahrens werden die erhaltenen Formkörper im Gegenstromprinzip gewaschen und Wasserstoffperoxid, Peressigsäure, Ozon oder Chlordioxid der letzten Waschstufe zugefügt.

In einer weiteren besonders vorteilhaften Ausführungsform des erfindungsgemäßen Verfahrens zweigt man Fällbad und/oder Waschwasser zwecks Rückgewinnung des Aminoxids des tertiären Amins ab und zersetzt die dort vorhandenen Reste von Wasserstoffperoxid, Peressigsäure, Ozon oder Chlordioxid. Die Zersetzung geschieht vorzugsweise katalytisch.

Als Katalysator ist Braunstein (MnO₂) besonders geeignet, vor allem für die Zersetzung von Wasserstoffperoxid. Braunstein wirkt im erfindungsgemäßen Verfahren besonders hervorragend als Katalysator, wenn er als Pulver vorliegt. Besonders vorteilhaft ist es, Braunstein zu verwenden, der auf einem Träger gebunden ist. Als Träger können übliche Träger auf SiO₂-Basis dienen, geeignet sind auch Träger auf Basis von Al₂O₃ oder Al₂O₃ und SiO₂. Dies ist deshalb von Vorteil, weil der Braunstein im Verhältnis zur behandelnden Flüssigkeit eine sehr große Oberfläche aufweist und gleichzeitig an relativ grobe SiO₂-Teilchen gebunden ist, so daß beim Durchströmen der Lösung keine großen Druckverluste auftreten bzw. Filtervorrichtungen zum Zurückhalten von Braunsteinpulver nicht notwendig sind.

Es ist möglich, zunächst die katalytische Zersetzung durchzuführen und dann die Mengen abgezweigtes Fällbad und/oder Waschwasser zwecks weiterer Aufarbeitung durch einen Ionenaustauscher zu leiten. Man kann aber auch zunächst das noch wasserstoffperoxid- bzw. peressigsäure-, ozon- oder chlordioxidhaltige abgeleitete Waschwasser oder abgeleitete Fällbadflüssigkeit über einen Ionenaustauscher leiten und erst dann eine katalytische Zersetzung vornehmen.

Geeignete Materialien für die katalytische Zersetzung sind u.a. Platingaze, Aktivkohle mit Palladium/Platin-Auflage, Palladium auf Aktivkohle, Palladium auf Aluminiumoxidträgern, auch Aktivkohle allein.

Die katalytische Zersetzung kann z.B. so durchgeführt werden, daß man die Waschwasserlösung oder das zu regenerierende Fällbad oder ein Gemisch der beiden über ein Katalysatorbett oder durch eine Patrone leitet, welche den Katalysator enthält. Auch kann man die Lösungen in einem Rührgefäß mit dem Katalysator in Kontakt bringen.

Außer durch katalytische Zersetzung ist es möglich, insbesondere Wasserstoffperoxid im Rahmen der Erfindung durch Enzyme zu zersetzen, wie beispielsweise durch Katalase.

Als Katalase ist z.B. eine aus Rinderleber gewonnene Katalase geeignet, die im Handel beispielsweise unter der Katalog-Nr. 0106836001 bei der Firma Boehringer Mannheim GmbH, Mannheim, Deutschland, erhältlich ist.

Ferner ist es auch möglich, die Zersetzung durch Bestrahlung zu bewirken, z.B. mittels UV-Licht.

Für die Durchführung des erfindungsgemäßen Verfahrens ist übliches, in Wasser gelöstes Wasserstoffperoxid geeignet. Es kann in reiner Form, d.h. als reine wäßrige Lösung ohne besondere Zusätze eingesetzt werden. Verwendbar sind jedoch auch handelsübliche Produkte, wie z.B. das unter der Handelsbezeichnung Dioxon 104 von der Firma Solvay Interox GmbH in D 82049 Pullach vertriebene Produkt.

Sehr geeignet ist auch ein unter dem Namen Bionet von der Firma Rohm und Haas, Philadelphia, USA vertriebenes Handelsprodukt, das eine Mischung aus Wasserstoffperoxid und Peressigsäure darstellt.

Das erfindungsgemäße Verfahren bietet aber nicht nur Vorteile bei der direkten Herstellung der Formkörper, d.h. einwandfreies Arbeiten, insbesondere in der Waschstrecke sowie das zur Verfügungstellen von Produkten, die keine oder erheblich weniger Keime und Verunreinigungen enthalten. Es wirkt sich auch vorteilhaft aus bei den Rückgewinnungsprozessen, welche an das eigentliche Herstellungsverfahren der Formkörper angeschlossen sind oder parallel ablaufen. So bleibt das Waschwasser, das zur Rückgewinnung des Aminoxids abgeleitet wird und in Tanks zunächst gelagert werden kann, über mehrere Wochen Lagerung völlig klar, wogegen es, wenn nicht nach dem erfindungsgemäßen Verfahren gearbeitet wird, innerhalb kurzer Zeit trüb wird. Es bilden sich Niederschläge, die bei der Weiterverarbeitung Schwierigkeiten machen. Es entfallen somit auch Reinigungsarbeiten an den Lagertanks, d.h. an den Gefäßen selber sowie an den an den Tanks evtl. angebrachten Filter, sowie an den Leitungssystemen.

Da die verwendeten Substanzen weitgehend zersetzt werden, ohne daß dabei schädliche Stoffe entstehen, arbeitet auch die Rückgewinnungsstufe äußerst umweltfreundlich. Durch Kombination der Zersetzung und des Einsatzes von Ionenaustauschern wird ein Gemisch an Wasser und Aminoxid erhalten, das sich problemlos wieder aufarbeiten läßt, so daß man das Aminoxid in einer hervorragenden Qualität erhält, so daß es im Herstellungsprozeß wieder eingesetzt werden kann. Das abgetrennte Wasser fällt in hervorragender Qualität an, so daß es wieder als Fällbadflüssigkeit oder als Waschwasser eingesetzt werden kann oder ohne weitere Probleme entsorgt werden kann.

Das Verfahren läßt sich bei der Verarbeitung von üblicher Cellulose wie Baumwoll-Linters, Zellstoff aber auch Cellulose auf Holzbasis einsetzen. Auch sind Cellulosen, die nach den verschiedensten Verfahren aufgeschlossen worden sind, geeignet, z.B. mittels Sulfit- und Sulfat-Aufschluß, mit Wasserdampf unter hohem Druck und explosionsartigem Entspannen behandeltes Holz (im englischen Sprachgebrauch "water extracted exploded wood", s. Polymer Communications 1986, Vol. 27, June, S. 171-2 genannt). Die Cellulose kann auch gebeucht, gebleicht, aktiviert oder auf eine andere Weise vorbehandelt sein. Insbesondere sind auch Cellulosearten, die von Hause aus bereits sehr stark zu Keimbildung, Algenbildung u.dgl. neigen, geeignet.

Das erfindungsgemäße Verfahren erlaubt nicht nur ein einwandfreies Waschen bei Zimmertemperatur, sondern ermöglicht auch die Durchführung des Waschprozesses bei höheren Temperaturen z.B. 70 bis 90°C.

In einigen Fällen kann es vorteilhaft sein, insbesondere wenn größere Mengen an aufzubereitendem Waschwasser und Fällbadflüssigkeit zusammenkommen und entweder zunächst für die Wiederaufbereitung gelagert werden oder bei kontinuierlicher Aufbereitung über einen Zwischenbehälter mit sehr großem Volumen geleitet werden, wo die Verweilzeit verhältnismäßig groß ist, zusätzlich zu der Dosierung der Substanzen in das Fällbad und/oder in die Waschstrecke eine oder mehrere Substanzen in den Lagertank bzw. in den Zwischentank zu dosieren.

Selbstverständlich ist es möglich, auch außerhalb der als bevorzugt angegebenen Konzentrationsbereichen zu arbeiten. So kann man z.B. mit der Wasserstoffperoxidkonzentration auch unterhalb 25 ppm arbeiten, z.B. mit 10 ppm oder auch über 10 000 ppm, z.B. 25 000 ppm.

Ozon wird vorzugsweise in geschlossenen Anlagen verwendet, d.h. in solchen Anlagen, wo sowohl für das Fällbad als auch für die Waschstrecken solche Abdeckungen vorhanden sind, daß zwischen der Außenatmosphäre, in der sich die Bedienungskräfte für die Anlage bewegen und der Atmosphäre über dem Fällbad und um die Waschstrecken kein oder nur ein zu vernachlässigender Austausch stattfindet. Im übrigen kann die geeignete Konzentration der verwendeten Substanzen von Fall zu Fall durch wenige Versuche optimiert werden.

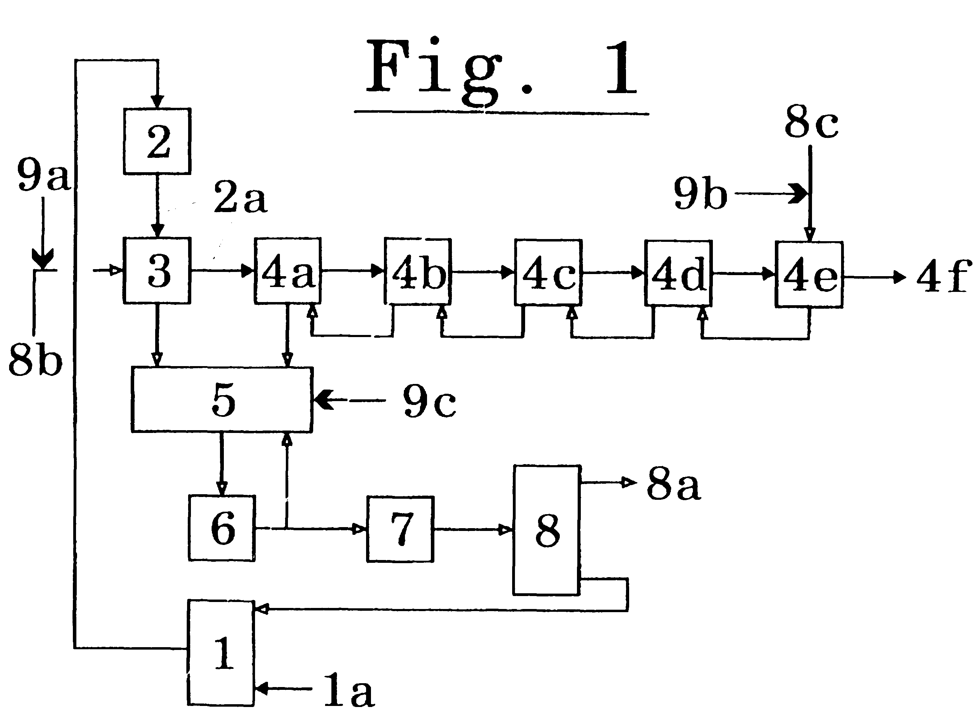

Im folgenden wir die Erfindung anhand der Figur 1 näher erläutert.

Auf an sich bekannte Weise wird aus Zellstoff (über Leitung ld zugeführt), aus N-Methylmorpholin-N-oxid und Wasser eine 14%ige Spinnlösung in einem Gefäß (1) hergestellt. Dies geschieht, indem man die Ausgangskomponenten unter Erwärmung miteinander vermischt und einen Teil des Wassers entfernt, wobei eine Lösung entsteht.

Diese Lösung wird einer Spinndüse (2) zugeführt, unter Druck durch die Düsenlöcher extrudiert, wobei ein Faden (2a) aus mehreren Einzelfilamenten entsteht, der nach Passieren eines Luftspalts in ein wäßriges Fällbad (3) gelangt, wo die Koagulation der Fäden stattfindet und ein Großteil des Lösungsmittels extrahiert wird. Dem Fällbad wird frisches Wasser oder Kondensat aus der Rückgewinnung (8) über eine Leitung (8b) zudosiert, um das Niveau im Fällbad aufrecht zu erhalten. Dem Fällbad wird ferner alle zwei Stunden eine 35%ige Wasserstoffperoxidlösung (Dioxon 104) über die Leitung (9a) zugegeben, und zwar in Mengen, daß sich im Fällbad eine mittlere Konzentration von Wasserstoffperoxid von 100 ppm ergibt.

Der koagulierte Faden wird sodann durch eine mehrstufige Waschstrecke geleitet (4a bis 4e). Das Waschen erfolgt im Gegenstromprinzip, wobei frisches Wasser in der Stufe (4e) über eine Leitung (8c) zugegeben wird. Das Waschwasser von (4e) wird für den Waschvorgang in der Stufe (4d) verwendet. Von (4d) gelangt das verbrauchte Wasser nach (4c) usw., bis nach Passieren der Waschstrecke (4a) das nun mit N-Methylmorpholin-N-oxid angereicherte Wasser zu einem Lagertank (5) geleitet wird. Über die Leitung (9b) wird permanent Wasserstoffperoxid in einer Menge zudosiert, daß sich das in der Stufe (4e) eingesetzte Waschwasser eine Wasserstoffperoxidkonzentration von 100 ppm aufweist. Der Faden wird anschließend zu weiteren Nachbehandlungsstufen weitergeführt, z.B. Trocknen, Aufwickeln u.dgl. Die Temperatur des Waschwassers beträgt 75°C, die Temperatur im Lagertank 35°C. Der Inhalt des Lagertanks wird über einen Filter (6) umgewälzt und von Fall zu Fall über den Filter (6) einem Ionenaustauscher (7) und der Lösungsmittelrückgewinnung (8) zugeführt. Die katalytische Zersetzung (in der Skizze nicht dargestellt) findet vor dem Ionenaustauscher (7) statt. Als Katalysator wird Mangandioxid auf einem SiO₂-Träger verwendet.

Die Rückgewinnung des Fällbads bzw. der Waschwasserflüssigkeit geschieht durch Eindampfen und Kondensieren des Wassers.

Die Leitung 8 dient zum Weiterleiten des rückgewonnenen Wassers, das direkt wieder eingesetzt werden kann. Über die Leitung 9c kann dem Tank (5), der als Lager- oder Zwischenbehälter dient, beispielsweise Wasserstoffperoxid zudosiert werden.

Bei der vorstehend beschriebenen Arbeitsweise kann die Anlage im Dreischichtenbetrieb mehrere Tage gefahren werden, bis eine erste Reinigung angezeigt ist.

Wird unter ansonst gleichen Bedingungen jedoch ohne die erfindungsgemäße Zugabe von Wasserstoffperoxid gearbeitet, ist eine Reinigung der Anlage mindestens drei mal an einem Arbeitstag erforderlich, d.h. bei 8-Stunden-Schichten muß mindestens jedesmal zwischen den Schichten gereinigt und die Anlage somit abgestellt werden.

Es war besonders überraschend, daß es mittels des erfindungsgemäßen Verfahrens möglich ist, den Herstellungsprozeß so zu beherrschen, daß die unerwünschte Bildung von Algen, Keimen, schleimartigen Ablagerungen u.dgl. nicht mehr stattfindet und daß auch die erhaltenen Formkörper weitgehend frei von den unerwünschten Bestandteilen sind. Dies ist besonders vorteilhaft bei der Herstellung von Membranen, bei denen höchste Anforderungen bezüglich der Sauberkeit gestellt werden.

Das Verfahren arbeitet sehr umweltfreundlich, da praktisch keine Abfallprodukte auftreten.

Es arbeitet im übrigen sehr wirtschaftlich, da man mit sehr geringen Mengen an Wasserstoffperoxid bzw. Ozon oder Peressigsäure oder Chlordioxid auskommt.

## Patentansprüche

1. Verfahren zur Herstellung von Formkörpern wie Fasern, Filamenten, Garnen, Filmen, Membranen in Form von Flachmembranen, Schlauchmembranen und Hohlfasermembranen, u.dgl. durch Pressen cellulosischer Lösungen in einem Aminoxid eines tertiären Amins und ggf. Wasser, insbesondere in N-Methylmorpholin-N-oxid und Wasser, durch eine Düse und Ausfällen in einem Fällbad, Waschen der erhaltenen Formkörper, wobei man Fällbadflüssigkeit und Waschwasser ggf. zwecks Rückgewinnung des Aminoxids des tertiären Amins aufarbeitet, dadurch gekennzeichnet, daß man dem Fällbad und/oder dem Waschwasser Wasserstoffperoxid, Peressigsäure, Ozon oder Chlordioxid zufügt.

2. Verfahren nach Anspruch 1, dadurch gekennzeichnet, daß man Wasserstoffperoxid verwendet, das zusätzlich ein oder mehrere Biozide enthält.

3. Verfahren nach Anspruch 1 oder 2, dadurch gekennzeichnet, daß man Wasserstoffstoffperoxid verwendet, das zusätzlich einen oder mehrere Stabilisatoren enthält.

4. Verfahren nach einem oder mehreren der Ansprüche 1 bis 3, dadurch gekennzeichnet, daß die erhaltenen Formkörper im Gegenstromprinzip gewaschen werden und man Wasserstoffperoxid, Peressigsäure, Ozon oder Chlordioxid der letzten Waschstufe zufügt.

5. Verfahren nach einem oder mehreren der Ansprüche 1 bis 4, dadurch gekennzeichnet, daß man Wasserstoffperoxid, in Mengen von 25 bis 10 000 ppm verwendet.

6. Verfahren nach Anspruch 5, dadurch gekennzeichnet, daß man Wasserstoffperoxid in Mengen von 50 bis 500 ppm verwendet.

7. Verfahren nach einem oder mehreren der Ansprüche 1 bis 6, dadurch gekennzeichnet, daß man Wasserstoffperoxid, Peressigsäure, Ozon oder Chlordioxid diskontinuierlich zufügt.

8. Verfahren nach einem oder mehreren der Ansprüche 1 bis 7, dadurch gekennzeichnet, daß man das Zufügen des Wasserstoffperoxids, der Peressigsäure, des Ozons oder des Chlordioxids automatisch durchführt.

9. Verfahren nach einem oder mehreren der Ansprüche 1 bis 8, dadurch gekennzeichnet, daß man Wasserstoffperoxid, Peressigsäure, Ozon oder Chlordioxid zu zweit oder zu mehreren im Wechsel zufügt.

10. Verfahren nach einem oder mehreren der Ansprüche 1 bis 8, dadurch gekennzeichnet, daß man die Substanzen Wasserstoffperoxid, Peressigsäure, Ozon oder Chlordioxid zu zweit oder zu mehreren im Gemisch verwendet.

11. Verfahren nach einem der Ansprüche 1 bis 3, dadurch gekennzeichnet, daß man Wasserstoffperoxid kontinuierlich zufügt und Peressigsäure, Ozon oder Chlordioxid zusätzlich diskontinuierlich zufügt.

12. Verfahren nach einem oder mehreren der Ansprüche 1 bis 11, dadurch gekennzeichnet, daß man die Reste von Wasserstoffperoxid, Peressigsäure und Ozon oder Chlordioxid, welche sich in der zwecks Rückgewinnung des Aminoxids des tertiären Amins abgeleiteten Menge Fällbad und/oder Waschwasser befinden, zersetzt.

13. Verfahren nach Anspruch 12, dadurch gekennzeichnet, daß man die Zersetzung katalytisch vornimmt.

14. Verfahren nach Anspruch 13, dadurch gekennzeichnet, daß man zur katalytischen Zersetzung Braunstein (MnO₂) verwendet.

15. Verfahren nach Anspruch 14, dadurch gekennzeichnet, daß man zur katalytischen Zersetzung auf einem SiO₂-Träger aufgebrachtes Mangandioxid verwendet.

16. Verfahren nach Anspruch 12, dadurch gekennzeichnet, daß man die Zersetzung enzymatisch durchführt.

17. Verfahren nach einem der Ansprüche 13 bis 16, dadurch gekennzeichnet, daß man die abgeleitete Fällbadflüssigkeit und/oder das Waschwasser nach der Zersetzung zwecks weiterer Aufarbeitung durch einen Ionenaustauscher leitet.

18. Verfahren nach einem der Ansprüche 13 bis 16, dadurch gekennzeichnet, daß man die abgeleitete Fällbadflüssigkeit und/oder Waschwasser erst über einen Ionenaustauscher leitet und danach die Reste an Wasserstoffperoxid, Peressigsäure oder Ozon zersetzt.

## Claims

1. Process for manufacturing cellulose formed objects such as fibers, filaments, yarns, films, membranes in form of flat membranes, hose membranes and hollow fiber membranes and the like by pressing cellulose solutions in an amine oxide of a tertiary amine and if necessary water, in particular in N-methylmorpholine-N-oxide and water, through a nozzle and precipitating in a coagulation bath, washing of the formed objects obtained, whereby coagulation bath liquid and washing water is processed, if necessary, for recovery of the amine oxide of the tertiary amine, characterized in that hydrogen peroxide, peroxyethanoic acid, ozone or chlorine dioxide is added to the coagulation bath and/or the washing water.

2. Process according to Claim 1 or 2, characterized in that hydrogen peroxide is used that additionally contains one or several biocides.

3. Process according to Claim 1 or 2, characterized in that hydrogen peroxide is used that additionally contains one or more stabilizers.

4. Process according to one or more of Claims 1 to 3, characterized in that the formed objects obtained are washed according to the countercurrent principle and that hydrogen peroxide, peroxyethanoic acid, ozone or chlorine dioxide is added to the last washing step.

5. Process according to one or more of Claims 1 to 4, characterized in that hydrogen peroxide is used in quantities of 25 to 10,000 ppm.

6. Process according to Claim 5, characterized in that hydrogen peroxide is used in quantities of 50 to 500 ppm.

7. Process according to one or more of Claims 1 to 6, characterized in that hydrogen peroxide, peroxyethanoic acid, ozone or chlorine dioxide is added discontinuously.

8. Process according to one or more of Claims 1 to 7, characterized in that hydrogen peroxide, peroxyethanoic acid, ozone or chlorine dioxide is added automatically.

9. Process according to one or more of Claims 1 to 8, characterized in that two or more of the substances hydrogen peroxide, peroxyethanoic acid, ozone or chlorine dioxide are added in rotation.

10. Process according to one or more of Claims 1 to 8, characterized in that two or more of the substances hydrogen peroxide, peroxyethanoic acid, ozone or chlorine dioxide are added to the mixture in combination.

11. Process according to one of Claims 1 to 3, characterized in that hydrogen peroxide is added continuously, and peroxyethanoic acid, ozone or chlorine dioxide is added discontinuously.

12. Process according to one of Claims 1 to 11, characterized in that the remaining hydrogen peroxide, peroxyethanoic acid, ozone or chlorine dioxide present in the coagulation bath and/or washing water diverted for recovery of the amine oxide of the tertiary amine is decomposed.

13. Process according to Claim 12, characterized in that the decomposition is carried out catalytically.

14. Process according to Claim 13, characterized in that manganese dioxide (MnO₂) is used for the catalytic decomposition.

15. Process according to Claim 14, characterized in that manganese dioxide bound on a SiO₂ carrier is used for the catalytic decomposition.

16. Process according to Claim 12, characterized in that the decomposition is carried out by enzymes.

17. Process according to one of Claims 13 to 16, characterized in that the diverted coagulation bath liquid and/or washing water is, after the decomposition, led through an ion exchanger for further processing.

18. Process according to one of Claims 13 to 16, characterized in that the diverted coagulation bath liquid and/or washing water is first led via an ion exchanger and the remaining hydrogen peroxide, peroxyethanoic acid or ozone is then decomposed.

## Revendications

1. Procédé de fabrication d'articles formés tels que des fibres, des filaments, des fils, des films, des membranes de type membrane plate, membrane tubulaire ou fibre creuse etc., par extrusion de solutions cellulosiques dans un N-oxyde d'amine tertiaire contenant éventuellement de l'eau, en particulier dans un mélange de N-oxyde de N-méthylmorpholine et d'eau, à travers une filière et coagulation dans un bain de coagulation, lavage des articles formés obtenus, le liquide du bain de coagulation et l'eau de lavage étant éventuellement recyclés en vue de la récupération du N-oxyde d'amine tertiaire, caractérisé par le fait que l'on ajoute au bain de coagulation et/ou à l'eau de lavage du peroxyde d'hydrogène, de l'acide peracétique, de l'ozone ou du dioxyde de chlore.

2. Procédé selon la revendication 1, caractérisé par le fait que l'on utilise du peroxyde d'hydrogène contenant en plus un ou plusieurs agents biocides.

3. Procédé selon la revendication 1 ou 2, caractérisé par le fait que l'on utilise du peroxyde d'hydrogène contenant en plus un ou plusieurs stabilisateurs.

4. Procédé selon une ou plusieurs des revendications 1 à 3, caracérisé par le fait que les articles formés obtenus sont lavés en contre-courant et que l'on ajoute, dans la dernière étape de lavage, du peroxyde d'hydrogène, de l'acide peracétique, de l'ozone ou du dioxyde de chlore.

5. Procédé selon une ou plusieurs des revendications 1 à 4, caractérisé par le fait que l'on utilise du peroxyde d'hydrogène à raison de 25 à 10 000 ppm.

6. Procédé selon la revendication 5, caractérisé par le fait que l'on utilise du peroxyde d'hydrogène à raison de 50 à 500 ppm.

7. Procédé selon l'une ou plusieurs des revendications 1 à 6, caractérisé par le fait que l'on ajoute en discontinu du peroxyde d'hydrogène, de l'acide peracétique, de l'ozone ou du dioxyde de chlore.

8. Procédé selon l'une ou plusieurs des revendications 1 à 7, caractérisé par le fait que l'addition du peroxyde d'hydrogène, de l'acide peracétique, de l'ozone ou du dioxyde de chlore se fait automatiquement.

9. Procédé selon une ou plusieurs des revendications 1 à 8, caractérisé par le fait que l'on ajoute en alternance deux ou plusieurs substances choisies parmi le peroxyde d'hydrogène, l'acide peracétique, l'ozone et le dioxyde de chlore.

10. Procédé selon une ou plusieurs des revendications 1 à 8, caractérisé par le fait que l'on utilise un mélange de deux ou plusieurs substances choisies parmi le peroxyde d'hydrogène, l'acide peracétique, l'ozone et le dioxyde de chlore.

11. Procédé selon l'une des revendications 1 à 3, caractérisé par le fait que l'on ajoute en continu du peroxyde d'hydrogène et en discontinu de l'acide peracétique, de l'ozone ou du dioxyde de chlore.

12. Procédé selon une ou plusieurs des revendications 1 à 11, caractérisé par le fait que l'on décomposé les résidus de peroxyde d'hydrogène, d'acide peracétique, d'ozone ou de dioxyde de chlore qui se trouvent dans la fraction de bain de coagulation ou d'eau de lavage, dérivée en vue de la récupération du N-oxyde d'amine tertiaire.

13. Procédé selon la revendication 12, caractérisé par le fait que la décomposition se fait avec catalyse.

14. Procédé selon la revendication 13, caractérisé par le fait que l'on utilise pour la décomposition catalytique du dioxyde de manganèse.

15. Procédé selon la revendication 14, caractérisé par le fait que l'on utilise pour la décomposition catalytique du dioxyde de manganèse immobilisé sur un support de SiO₂.

16. Procédé selon la revendication 12, caractérisé par le fait que la décomposition se fait par voie enzymatique.

17. Procédé selon l'une des revendications 13 à 16, caractérisé par le fait que l'on fait passer le liquide du bain de coagulation et/ou l'eau de lavage dérivé, après la décomposition, sur une résine échangeuse d'ions pour les épurer davantage.

18. Procédé selon l'une des revendications 13 à 16, caractérisé par le fait que l'on fait passer d'abord le liquide du bain de coagulation et/ou l'eau de lavage dérivés par une résine échangeuse d'ions et que l'on décompose ensuite les résidus de peroxyde d'hydrogène, d'acide peracétique ou d'ozone.
